# EUROPÄISCHE PATENTANMELDUNG

(11) **EP 2 662 713 A1**
(43) Veröffentlichungstag der Anmeldung: **13.11.2013**
(21) Anmeldenummer: 13166772.7
(22) Anmeldetag: 07.05.2013
(51) Int. Cl.: G02B 6/00, F21S 8/10

(54) **Beleuchtungsvorrichtung für Fahrzeuge**

(30) Priorität: 07.05.2012 DE 102012103997
(71) Anmelder: Hella KGaA Hueck & Co., 59552 Lippstadt (DE)
(72) Erfinder: Bungenstock, Carmen, 33165 Kleinenberg (DE); Urbaniak, Christian, 71069 Sindelfingen (DE)

(57) **Zusammenfassung**

Beleuchtungsvorrichtung für Fahrzeuge mit einem Lichtleiter enthaltend eine Lichteinkoppelfläche zur Einkopplung von Licht einer Lichtquelle an einem ersten Ende und/oder an einem zweiten Ende des Lichtleiters, eine sich zwischen dem ersten Ende und dem zweiten Ende des Lichtleiters erstreckende Vorderseite, die als Lichtauskoppelfläche zur Auskopplung des Lichtes vorgesehen ist, eine sich zwischen dem ersten Ende und dem zweiten Ende des Lichtleiters erstreckende Rückseite desselben, die eine Anzahl von Lichtauskoppelelementen aufweist zur Umlenkung des eingekoppelten Lichtes in Richtung der Vorderseite in der Weise, dass das eingekoppelte Licht an der Vorderseite auskoppelbar ist, wobei die Lichtauskoppelelemente als Mikrooptikelemente (8, 8', 8") ausgebildet sind. Die Mikrooptikelemente können aus Mikroprismen bestehen, deren Höhe und Breite und/oder deren Dichte mit zunehmenden Abstand von der Lichtquelle zunimmt.

## Beschreibung

Die Erfindung betrifft eine Beleuchtungsvorrichtung für Fahrzeuge mit einem Lichtleiter enthaltend eine Lichteinkoppelfläche zur Einkopplung von Licht einer Lichtquelle an einem ersten Ende und/oder an einem zweiten Ende des Lichtleiters, eine sich zwischen dem ersten Ende und dem zweiten Ende des Lichtleiters erstreckende Vorderseite, die als Lichtauskoppelfläche zur Auskopplung des Lichtes vorgesehen ist, eine sich zwischen dem ersten Ende und dem zweiten Ende des Lichtleiters erstreckende Rückseite desselben, die eine Anzahl von Lichtauskoppelelementen aufweist zur Umlenkung des eingekoppelten Lichtes in Richtung der Vorderseite in der Weise, dass das eingekoppelte Licht an der Vorderseite auskoppelbar ist.

Aus der DE 198 03 537 A1 ist eine Beleuchtungsvorrichtung mit einem stabförmigen Lichtleiter bekannt, der an einem ersten Ende und/oder an einem zweiten Ende eine Lichteinkoppelfläche zur Einkopplung von Licht in den Lichtleiter aufweist. Die Lichteinkoppelfläche erstreckt sich an einer Rückseite des Lichtleiters, an dem Lichtauskoppelelemente angeordnet sind, so dass das stirnseitig eingekoppelte Licht nicht nur in Ausbreitungsrichtung längst des Lichtleiters weitergeleitet wird, sondern auf einer zu der Rückseite gegenüberliegenden Vorderseite ausgekoppelt wird. Die Lichtauskoppelelemente sind als Prismenelemente ausgebildet, die unmittelbar nebeneinander liegend auf der Rückseite angeordnet sind. Damit das von der Lichtquelle abgestrahlte und an der Rückseite eingekoppelte Licht in Längsrichtung des Lichtleiters umgelenkt wird, ist in einem Lichteinkoppel-Abschnitt des Lichtleiters eine Umlenkfläche angeordnet, die zur besseren Lichtrichtung Mikrooptikelemente aufweisen kann. Die bekannte Beleuchtungsvorrichtung hat sich in der Praxis bewährt und ermöglicht eine bauraumsparende Bereitstellung von Signallichtfunktionen. Allerdings sind die Lichtauskoppelelemente nicht als Mikrooptikelemente ausgebildet, sondern sind für einen Betrachter von außen erkennbar, was zu Beeinträchtigung hinsichtlich des homogenen Erscheinungsbildes der Beleuchtungsvorrichtung führt. Zwar sind aus der DE 10 2007 015 747 A1 Mikrooptikelemente für Lichtleiter bekannt. Jedoch weisen diese eine so kleine Dimension (Breite 1 µm bis 10 µm, Höhe 0,1 µm bis 5 µm) auf, dass sie nur mit großem herstellungstechnischen Aufwand realisierbar sind. Darüber hinaus sind diese bekannten Mikrooptikelemente auf einer lichtauskoppelnden Seite des Lichtleiters in einem vorgegebenen Abstand zueinander angeordnet, so dass die Lichtauskopplung unmittelbar an diesen Mikrooptikelementen erfolgt.

Aufgabe der vorliegenden Erfindung ist es daher, eine Beleuchtungsvorrichtung für Fahrzeuge mit einem Lichtleiter weiterzubilden, der auf einer der Lichtauskoppelseite gegenüberliegenden Rückseite Lichtauskoppelelemente aufweist, so dass bei einer geringen Bautiefe eine vorgegebene Signalfunktion lichttechnisch effektiv und unter Bildung eines homogenen Erscheinungsbildes bereitgestellt wird.

Zur Lösung dieser Aufgabe ist die Erfindung mit dem Oberbegriff des Patentanspruchs 1 dadurch gekennzeichnet, dass die Lichtauskoppelelemente als Mikrooptikelemente ausgebildet sind.

Der besondere Vorteil der Erfindung besteht darin, dass durch Ausbildung der Lichtauskoppelelemente als Mikrooptikelemente nicht nur eine lichttechnisch effektive Bereitstellung einer Signalfunktion, sondern auch ein homogenes Erscheinungsbild des Lichtleiters bewirkt wird. Der Lichtleiter weist eine gleichmäßige und anmutend erscheinende Umfangsfläche auf, die für einen Betrachter von außen hinter einer glasklaren Abdeckscheibe ein homogenes Erscheinungsbild ermöglicht.

Nach einer bevorzugten Ausführungsform der Erfindung weisen die Mikrooptikelemente in einem Lichtauskoppel-Hauptabschnitt und/oder einem Lichteinkoppel-Abschnitt des Lichtleiters eine Breite in einem Bereich zwischen 100 µm und 500 µm auf. Die Dimensionierung der Mikrooptikelemente ist so klein, dass der Lichtleiter auch im Nichtbetriebszustand desselben ein homogenes Erscheinungsbild aufweist bzw. die einzelnen Mikrooptikelente für einen Betrachter nicht mehr erkennbar sind. Andererseits ist die Dimensionierung der Mikrooptikelemente so groß, dass sie unter einem vertretbaren fertigungstechnischen Aufwand für die Massenfertigung realisierbar sind.

Nach einer Weiterbildung der Erfindung sind benachbarte Mikrooptikelemente in einem Lichteinkoppel-Abschnitt in einem größeren Abstand zueinander angeordnet als in dem Lichtauskoppel-Hauptabschnitt. Insbesondere nimmt der Abstand benachbarter Mikrooptikelemente in dem Lichteinkoppel-Abschnitt linear oder exponentiell in Richtung des Lichtauskoppel-Hauptabschnitts ab, so dass eine gleichmäßige Lichtauskopplung entlang des gesamten Lichtleiters zwischen dem ersten und zweiten Ende gegeben ist.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Fig. 1: eine Seitenansicht eines Lichtleiters, an dessen beiden Endseiten Licht eingekoppelt wird,
- Fig. 2: eine vergrößerte Darstellung des Lichtleiters in einem Lichteinkoppel-Abschnitt desselben.

Eine Beleuchtungsvorrichtung für Fahrzeuge weist einen Lichtleiter 1 auf, der in einem nicht dargestellten Gehäuse eines Scheinwerfers oder einer Heckleuchte zur Erzeugung einer Signalfunktion, beispielsweise für Tagfahrlicht, Blinklicht, Bremslicht eingesetzt wird. Das topfförmige Gehäuse der Beleuchtungsvorrichtung ist vorzugsweise durch eine glasklare Abdeckscheibe abgedeckt.

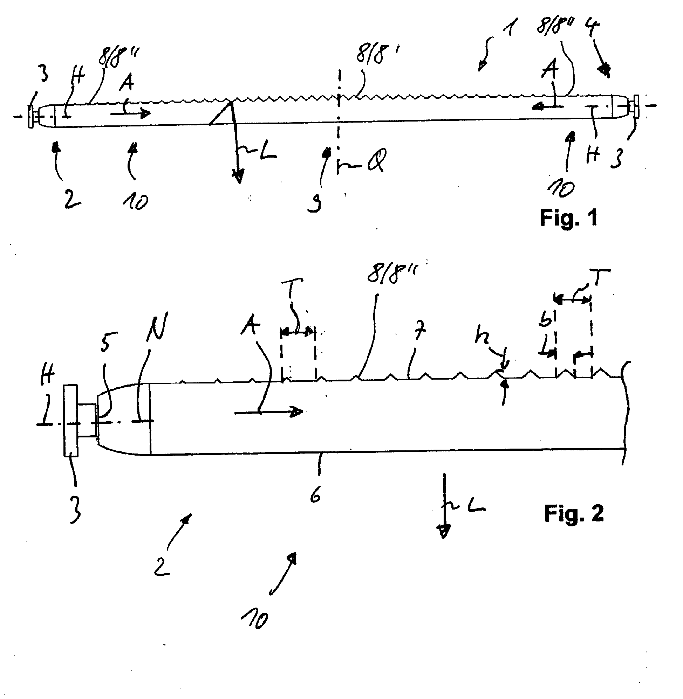

Der Lichtleiter 1 gemäß der Ausführungsform nach den Figuren 1 und 2 ist stabförmig ausgebildet. An einem ersten Ende 2 des Lichtleiters 1 ist eine erste Lichtquelle 3 und an einem gegenüberliegenden zweiten Ende 4 des Lichtleiters 1 eine zweite Lichtquelle 3 angeordnet. Eine Hauptachse H der Lichtquelle 3, die als eine LED-Lichtquelle ausgebildet ist, ist koaxial zu dem zylinderförmigen Lichtleiter 1 angeordnet.

An dem ersten Ende 2 und an dem zweiten Ende 4 des Lichtleiters 1 ist jeweils eine Lichteinkoppelfläche 5 des Lichtleiters 1 angeordnet, über die von den Lichtquellen 3 abgestrahltes Licht L in den Lichtleiter 1 eingekoppelt wird und durch Totalreflexion an den sich zwischen dem ersten Ende 2 und dem zweiten Ende 4 erstreckenden Umfangsflächen des Lichtleiters 1 in Längsrichtung desselben bzw. in Ausbreitungsrichtung A weitergeleitet wird. Eine Normale (N) der Lichteinkoppelfläche 5 verläuft in Ausbreitungsrichtung A und in Richtung der Hauptachse H der Lichtquellen 3. Beispielsweise kann die Lichteinkoppelfläche 5 konvexförmig ausgebildet sein, so dass ein hoher Lichtanteil der Lichtquelle 3 in den Lichtleiter 1 eingekoppelt wird.

Der Lichtleiter 1 weist an seinen Umfangsflächen zum einen eine Vorderseite 6 auf, die als eine Lichtauskoppelfläche zur Auskopplung des eingekoppelten Lichtes L dient.

Auf einer zu der Vorderseite 6 gegenüberliegenden Rückseite 7 weist der Lichtleiter 1 eine Mehrzahl von Lichtauskoppelelementen 8 auf, die in Längsrichtung des Lichtleiters 1 bzw. in Ausbreitungsrichtung A beabstandet oder unmittelbar nebeneinander liegend verteilt angeordnet sind. Diese Lichtauskoppelelemente 8 sind als Mikrooptikelemente ausgebildet, wobei Mikrooptikelemente 8' in einem Lichtauskoppel-Hauptabschnitt 9 des Lichtleiters 1 eine größere Dimension aufweisen als Lichtauskoppelelemente 8", die in einem Lichteinkoppel-Abschnitt 10 des Lichtleiters 1 angeordnet sind.

Die Mikrooptikelemente 8, 8', 8" sind jeweils als Prismenoptikelemente ausgebildet, die als dreieckförmige Ausbuchtungen an der Rückseite 7 des Lichtleiters 1 angeordnet sind. Diese prismenförmigen Mikrooptikelemente 8, 8', 8" erstrecken sich in Umfangsrichtung des Lichtleiters 1 um einen spitzen Winkel. Die Länge der jeweiligen Mikrooptikelemente 8, 8', 8" ist somit kleiner als die Hälfte oder ein Viertel des Umfangs des Lichtleiters 1. Die Mikrooptikelemente 8, 8', 8" sind in Ausbreitungsrichtung A nebeneinander angeordnet, wobei ein Abstand T zwischen zur gleichen Stirnseite des Lichtleiters 1 zugewandten Enden benachbarter Mikrooptikelementen 8, 8', 8" über die Länge des Lichtleiters 1 stets konstant ist, und zwar vorzugsweise in einem Bereich zwischen 100 µm und 200 µm liegt. In dieser Größenordnung wird ein Optimum an gleichmäßiger Ausleuchtung und homogenem Erscheinungsbild für den Lichtleiter erreicht. Um einen Kompromiss zwischen Homogenität und Anmutung des Lichtleiters zu Kostenaufwand zu erreichen, kann auch ein Abstand T von 300 µm bis 500 µm eingesetzt werden. Diese damit verbundenen Größenordnungen der Mikrooptikelemente lassen sich mit einem geringeren Kostenaufwand durch verkürzte Bearbeitungszeiten während der Herstellung der Mikroprismen umsetzen.

Der Abstand benachbarter Mikrooptikelemente 8' im Lichtauskoppel-Hauptabschnitt 9 nimmt von der Lichteinkoppel-Abschnitt 10 in Richtung einer mittleren Querebene Q des Lichtleiters 1 kontinuierlich zu. Vorzugsweise sind die Mikrooptikelemente 8' im Bereich der mittleren Querebene Q des Lichtleiters 1 unmittelbar nebeneinander liegend angeordnet, wenn es sich um einen Lichtleiter 1 mit doppelseitiger Lichteinkopplung handelt. Die Mikrooptikelemente 8' weisen eine zur mittleren Querebene Q kontinuierlich ansteigende Breite b im Bereich zwischen 100 µm und 200 µm auf. Die Mikrooptikelemente 8' weisen eine zur mittleren Querebene Q kontinuierlich ansteigende Höhe h im Bereich zwischen 40 µm und 80 µm auf.

Nach einer alternativen Ausführungsform der Erfindung können die Mikrooptikelemente 8" auch eine in Ausbreitungsrichtung A verlaufende Breite b zwischen 300 µm und 500 µm aufweisen. Die Höhe h dieser Mikrooptikelemente 8' liegt dann in einem Bereich zwischen 115 µm und 175 µm.

Der Lichteinkoppel-Abschnitt 10 des Lichtleiters 1 erstreckt sich zu beiden Seiten des Lichtauskoppel-Hauptabschnitts 9 und weist vergleichsweise kleiner dimensionierte Mikrooptikelemente 8" auf. Eine Breite b benachbarter Mikrooptikelemente 8" und eine Höhe h der Mikrooptikelemente 8" nimmt vom ersten Ende 2 bzw. zweiten Ende 4 des Lichtleiters 1 in Richtung des Lichtauskoppel-Hauptabschnitts 9 linear oder exponentiell zu. Der konstante Abstand T von zur gleichen Stirnseite des Lichtleiters orientierten Enden benachbarter Mikrooptikelemente 8" liegt wie bei den Mikrooptikelementen 8' vorzugsweise in einem Bereich zwischen 100 µm und 200 µm liegen. Die Breite der Mikrooptikelemente 8" kann im Bereich zwischen 5 µm und 10 µm sowie die Höhe in einem Bereich zwischen 2 µm und 4 µm liegen.

Nach einer nicht dargestellten alternativen Ausführungsform kann der Abstand T benachbarter Mikrooptikelemente 8, 8', 8" auch in einem Bereich zwischen 300 µm und 500 µm liegen. Die minimale Breite b der Mikrooptikelemente 8 liegt dann in einem Bereich zwischen 15 µm und 20 µm, die maximale Breite b zwischen 300 µm und 500 µm sowie die maximale Höhe h zwischen 115 µm und 175 µm.

Durch die kontinuierliche Vergrößerung der Mikrooptikelemente 8'in Richtung des Lichtauskoppel-Hauptabschnitts 9 wird eine homogene Lichtauskopplung über die gesamte Länge des Lichtleiters 1 erzielt.

Nach einer nicht dargestellten alternativen Ausführungsform der Erfindung kann der Lichtleiter 1 auch lediglich an einem einzigen Ende eine Lichteinkoppelfläche aufweisen. In diesem Fall verfügt der Lichtleiter 1 lediglich über einen einzigen Lichteinkoppel-Abschnitt 10. Der Lichtauskoppel-Hauptabschnitt 9 mit den gleich ausgebildeten Mikrooptikelemente 8' erstreckt sich dann bis unmittelbar zu dem gegenüberliegenden zweiten Ende 4 des Lichtleiters 1.

Nach einer nicht dargestellten alternativen Ausführungsform der Erfindung kann der Lichtleiter 1 auch als flächenhafter Lichtleiter ausgebildet sein, wobei an einer langgestreckten Schmalseite mehrere Lichtquellen zur Lichteinkopplung vorgesehen sind.

Der Lichtleiter 1 kann geradlinig und/oder bogenförmig ausgebildet sein.

### Bezugszeichenliste

- 1: Lichtleiter
- 2: 1. Ende (1)
- 3: Lichtquelle
- 4: 2. Ende (1)
- 5: Lichteinkoppelfläche
- 6: Vorderseite
- 7: Rückseite
- 8, 8', 8": Lichtauskoppelelemente
- 9: Lichtauskoppel-Hauptabschnitt
- 10: Lichteinkoppel-Abschnitt

- h: Höhe
- b: Breite
- L: Licht
- A: Ausbreitungsrichtung
- T: Abstand
- H: Hauptachse
- N: Normale

## Patentansprüche

1. Beleuchtungsvorrichtung für Fahrzeuge mit einem Lichtleiter enthaltend
- eine Lichteinkoppelfläche zur Einkopplung von Licht einer Lichtquelle an einem ersten Ende und/oder an einem zweiten Ende des Lichtleiters,
- eine sich zwischen dem ersten Ende und dem zweiten Ende des Lichtleiters erstreckende Vorderseite, die als Lichtauskoppelfläche zur Auskopplung des Lichtes vorgesehen ist,
- eine sich zwischen dem ersten Ende und dem zweiten Ende des Lichtleiters erstreckende Rückseite desselben, die eine Anzahl von Lichtauskoppelelementen aufweist zur Umlenkung des eingekoppelten Lichtes in Richtung der Vorderseite in der Weise, dass das eingekoppelte Licht an der Vorderseite auskoppelbar ist, **dadurch gekennzeichnet, dass** die Lichtauskoppelelemente als Mikrooptikelemente (8, 8', 8") ausgebildet sind.

2. Beleuchtungsvorrichtung nach Anspruch 1, **dadurch gekennzeichnet, dass** zum gleichen Ende (2, 4) des Lichtleiters (1) orientierte Enden der benachbarten Mikrooptikelemente (8, 8") einen gleichen Abstand (T) zueinander aufweisen.

3. Beleuchtungsvorrichtung nach Anspruch 1 oder 2, **dadurch gekennzeichnet, dass** die in einem Lichtauskoppel-Abschnitt (9) des Lichtleiters (1) angeordneten Mikrooptikelemente (8, 8') einen in Ausbreitungsrichtung (A) des eingekoppelten Lichtes (L) erstreckende Breite (b) in einem Bereich zwischen 100 µm und 500 µm, insbesondere in einem Bereich zwischen 100 µm und 200 µm aufweisen.

4. Beleuchtungsvorrichtung nach Anspruch 2 oder 3, **dadurch gekennzeichnet, dass**, die Mikrooptikelemente (8, 8') des Lichtauskoppel-Abschnitts (9) eine quer zur Ausbreitungsrichtung (A) verlaufende Höhe (h) in einem Bereich von 40 µm bis 200 µm aufweisen.

5. Beleuchtungsvorrichtung nach einem der Ansprüche 1 bis 4, **dadurch gekennzeichnet, dass** die benachbarten Mikrooptikelemente (8, 8") in einem Lichteinkoppel-Abschnitt (10) des Lichtleiters (1) eine sich in Richtung des Lichtauskoppel-Hauptabschnitts (9) vergrößernde Breite (b) und vergrößernde Höhe (h) aufweisen.

6. Beleuchtungsvorrichtung nach einem der Ansprüche 1 bis 5, **dadurch gekennzeichnet, dass** die im Lichteinkoppel-Abschnitt (10) angeordneten Mikrooptikelemente (8, 8") eine sich in Ausbreitungsrichtung (A) des einkoppelten Lichtes (L) erstreckende Breite (b) in einem Bereich zwischen 5 µm und 10 µm und eine Höhe (h) in einem Bereich zwischen 2 µm und 4 µm aufweisen.

7. Beleuchtungsvorrichtung nach Anspruch 5 oder 6, **dadurch gekennzeichnet, dass** die Breite (b) der im Lichteinkoppel-Abschnitt (10) angeordneten Mikrooptikelemente (8, 8") in Ausbreitungsrichtung (A) linear oder exponentiell zunimmt.

8. Beleuchtungsvorrichtung nach einem der Ansprüche 1 bis 7, **dadurch gekennzeichnet, dass** die Lichtauskoppelelemente (8, 8', 8") als Prismenoptikelemente ausgebildet sind.

9. Beleuchtungsvorrichtung nach einem der Ansprüche 1 bis 8, **dadurch gekennzeichnet, dass** der Lichtleiter (1) stabförmig oder flächig ausgebildet ist.

10. Beleuchtungsvorrichtung nach einem der Ansprüche 1 bis 9, **dadurch gekennzeichnet, dass** eine Hauptachse (H) der Lichtquelle (3) und eine Normale (N) der Lichteinkoppelfläche (5) in der Ausbreitungsrichtung (A) verlaufen.
